# EUROPEAN PATENT SPECIFICATION

(11) **EP 2 155 365 B1**
(45) Date of publication and mention of the grant of the patent: **22.06.2011**
(21) Application number: 08764548.7
(22) Date of filing: 16.05.2008
(51) Int. Cl.: B01D 53/94, B01J 23/10, B01J 23/63, B01J 27/02, B01J 27/053

(54) **OXYGEN STORAGE/RELEASE MATERIAL AND EXHAUST GAS PURIFYING CATALYST COMPRISING THE SAME**
MATERIAL ZUR SPEICHERUNG/ABGABE VON SAUERSTOFF SOWIE EIN DIESES MATERIAL ENTHALTENDER ABGASREINIGUNGSKATALYSATOR
MATERIAU DE STOCKAGE/LIBERATION D'OXYGENE ET CATALYSEUR DE PURIFICATION DE GAZ D'ECHAPPEMENT CONTENANT LEDIT MATERIAU

(30) Priority: 21.05.2007 JP 2007134025
(43) Date of publication of application: 24.02.2010
(73) Proprietor: National University Corporation Kumamoto University, Kumamoto-shi Kumamoto 860-8555 (JP); Toyota Jidosha Kabushiki Kaisha, Toyota-shi, Aichi 471-8571 (JP)
(72) Inventor: MACHIDA, Masato, Kumamoto-shi Kumamoto 860-8555 (JP); IKEUE, Keita, Kumamoto-shi Kumamoto 860-8555 (JP); MIURA, Masahide, Toyota-shi Aichi 471-8571 (JP)
(74) Representative: Duckworth, Timothy John
(86) International application number: PCT/JP2008/059502
(87) International publication number: WO 2008/143341

(56) References cited:
- WO-A-2006/027976

## Description

### TECHNICAL FIELD

The present invention relates to an oxygen storage/release material used in an exhaust gas purifying catalyst for purifying an exhaust gas from an internal combustion engine and the like, and an exhaust gas purifying catalyst comprising the same.

### BACKGROUND ART

Conventionally, a three-way catalyst capable of simultaneously performing oxidation of carbon monoxide (CO) and hydrocarbon (HC) and reduction of nitrogen oxide (NOₓ) has been used as the catalyst for purifying automotive exhaust gases. For example, catalysts obtained by supporting a noble metal such as platinum (Pt), rhodium (Rh) and palladium (Pd) on a porous oxide support such as alumina (Al₂O₃) are widely known. In order to simultaneously and effectively purify C0, HC and NOₓ by the activity of the three-way catalyst, it is important that the ratio between air and fuel (air-fuel ratio A/F) supplied to the automotive engine is controlled to the near theoretical air-fuel ratio (stoichiometric ratio).

However, the actual air-fuel ratio fluctuates to the rich (fuel rich atmosphere) side or the lean (fuel lean atmosphere) side centering on the stoichiometric ratio depending on the driving conditions or the like of an automobile and in turn, the exhaust gas atmosphere also fluctuates to the rich side or the lean side. For this reason, high purification performance cannot be necessarily ensured only by a three-way catalyst. In order to enhance the exhaust gas purifying ability of the three-way catalyst by absorbing the fluctuation of the oxygen concentration in the exhaust gas, a material having a so-called oxygen storage/release capacity of storing oxygen when the oxygen concentration in the exhaust gas is high and releasing oxygen when the oxygen concentration in the exhaust gas is low, is used in the exhaust gas purifying catalyst.

Regarding the oxygen storage/release material, for example, ceria (CeO₂) or a material based on ceria (CeO₂), such as ceria-zirconia (CeO₂-ZrO₂) composite oxide, is known and widely used in practice. However, in order to achieve stable purification of an exhaust gas, an oxygen storage/release material having a higher oxygen storage/release capacity has been demanded and studied.

Japanese Unexamined Patent Publication (Kokai) Nos. 2005-087892 and 2006-075716 describe an exhaust gas purifying catalyst comprising an oxygen storage/release material consisting of a rare earth oxysulfate or oxysulfide represented by A₂O₂SO₄ or A₂O₂S (A is a rare earth element) and a noble metal supported thereon. In these patent publications, the exhaust gas purifying catalyst comprising an oxygen storage/release material consisting of a rare earth oxysulfate or oxysulfide and a noble metal supported thereon is found to have an oxygen storage/release capacity about 8 times higher than that of conventional exhaust gas purifying catalysts which comprise an oxygen storage/release material consisting of a CeO₂-ZrO₂ composite oxide and a noble metal supported thereon.

### DISCLOSURE OF THE INVENTION

However, such an oxygen storage/release material consisting of a rare earth oxysulfate or oxysulfide has a problem in that the temperature allowing the material to exhibit the oxygen storage/release capacity is generally high compared to conventional oxygen storage/release materials consisting of a ceria (CeO₂)-based material, and the material does not act at low temperatures.

Accordingly, an object of the present invention is to provide an oxygen storage/release material using a rare earth oxysulfate or oxysulfide, which has a high oxygen storage/release capacity even at lower temperatures, and an exhaust gas purifying catalyst comprising the same.

The present invention for attaining this object is as follows.
(1) An oxygen storage/release material, comprising a compound consisting of Pr₂O₂SO₄ and/or Pr₂O₂S in which a part of Pr is replaced with Ce.
(2) The oxygen storage/release material described in item (1), wherein the compound consists of (Pr₁₋ₓCeₓ)₂O₂SO₄ and/or (Pr₁₋ₓCeₓ)₂O₂S wherein x is a number of 0.005 to 0.5.
(3) An exhaust gas purifying catalyst, comprising the oxygen storage/release material described in item (1) or (2) and a metal supported thereon.

### BRIEF DESCRIPTION OF DRAWINGS

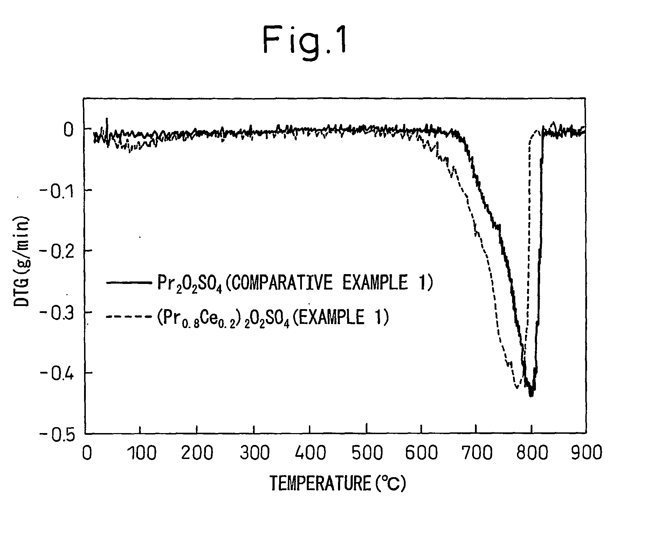

Fig. 1 is a graph showing the measurement results of derivative thermogravimetric analysis (DTG) regarding exhaust gas purifying catalysts of an Example and a Comparative Example.

### BEST MODE FOR CARRYING OUT THE INVENTION

An oxygen storage/release material of the present invention comprises a compound consisting of Pr₂O₂SO₄ and/or Pr₂O₂S in which a part of Pr is replaced with Ce.

The oxygen storage/release material generally stores or releases oxygen by a redox reaction resulting from a valence change of the element ion constituting the oxygen storage/release material. In conventional oxygen storage/release materials using a ceria-zirconia composite oxide (e.g., (CeZr)O₂), in a rich atmosphere, i.e., when the oxygen concentration in the exhaust gas is low, oxygen is released generally through a reaction represented by the following formula:

(CeZr)O₂ → (CeZr)O_{1.5} + 1/4O₂ (1)

On the other hand, in a lean atmosphere, i.e., when the oxygen concentration in the exhaust gas is high, oxygen is stored through a reverse reaction. Such a reversible redox reaction absorbs the fluctuation of the air-fuel ratio A/F in the exhaust gas, and promotes the purification of the exhaust gas. Compared to this, in the oxygen storage/release material using a rare earth oxysulfate (A₂O₂SO₄, wherein A is a rare earth element), oxygen is released by changing a rare earth oxysulfate to a rare earth oxysulfide through the following reaction:

A₂O₂SO₄ → A₂O₂S + 2O₂ (2)

i.e., a redox reaction of the sulfur element contained in the rare earth oxysulfate, and oxygen is stored through a reverse reaction.

As is clear from formulae (1) and (2), the oxygen storage/release material using a rare earth oxysulfate and/or oxysulfide theoretically has an oxygen storage/release capacity about 8 times higher than that of the conventional ceria-zirconia composite oxide. Accordingly, when an oxygen storage/release material consisting of a rare earth oxysulfate and/or oxysulfide having such a high oxygen storage/release capacity is used in an exhaust gas purifying catalyst, the catalyst is enhanced in the ability of absorbing the fluctuation of the air-fuel ratio (A/F) in an exhaust gas, as a result, the purification performance of the catalyst is enhanced.

According to the present invention, a compound consisting of Pr₂O₂SO₄ and/or Pr₂O₂S which are praseodymium oxysulfate and/or oxysulfide, and in which a part of Pr is replaced with Ce, is used as an oxygen storage/release material. Generally, the rare earth oxysulfate and/or oxysulfide have an oxygen storage/release capacity only in a temperature range higher than from 600 to 700°C, although this may vary depending on other various conditions such as the rare earth element used and the composition or concentration of the ambient atmosphere gas. Pr₂O₂SO₄ and/or Pr₂O₂S using praseodymium (Pr) as the rare earth element also have an oxygen storage/release capacity generally in a temperature range higher than 600 to 700°C. Therefore, in the case of an exhaust gas purifying catalyst using an oxygen storage/release material consisting of such a material, the exhaust gas purifying performance in a temperature range lower than 600 to 700°C becomes low.
The present inventors have found that when at least a part of Pr in a compound consisting of Pr₂O₂SO₄ and/or Pr₂O₂S is replaced with Ce, the temperature at which the oxygen storage/release material exhibits the oxygen release capacity is lowered, as compared to a case where partial replacement with Ce is not effected.

Without wishing to be bound by any particular theory, it is believed that the structure of sulfate ion in Pr₂O₂SO₄ can be distorted by replacing a part of Pr in Pr₂O₂SO₄ with Ce, so that a reversible reaction between oxysulfate and oxysulfide of praseodymium represented by the following formula (3) is likely to occur.

Pr₂O₂SO₄ → Pr₂O₂S + 2O₂ (3)

In the present invention, Pr in the compound Pr₂O₂SO₄ can be replaced with Ce in a range of generally from 0.5 to 50 mol%, preferably from 5 to 25 mol%.

The oxygen storage/release material consisting of (Pr₁₋ₓCeₓ)₂O₂SO₄ (wherein x is generally a number of 0.005 to 0.5), in which at least a part of Pr in Pr₂O₂SO₄ of praseodymium oxysulfate is replaced with Ce, may be prepared by any method known to a person skilled in the art. According to the present invention, (Pr₁₋ₓCeₓ)₂O₂SO₄ may be prepared, for example, by a method using a surfactant as a source of a sulfuric acid group moiety in (Pr₁₋ₓceₓ)₂O₂SO₄. Specifically, (Pr₁₋ₓCeₓ)₂O₂SO₄ may be prepared by mixing praseodymium nitrate as a source of praseodymium, cerium nitrate as a source of cerium corresponding to the amount in which Pr should be replaced, a basic solvent for hydroxylating them, such as aqueous ammonia, and a surfactant as a source of a sulfuric acid group moiety, such as sodium dodecylsulfate (SDS), at a predetermined concentration, and subjecting the obtained precipitate to washing, drying, pulverization, firing and the like.

The surfactant, such as sodium dodecylsulfate, used as a source of a sulfuric acid group moiety in (Pr₁₋ₓCeₓ)₂O₂SO₄ may be introduced into praseodymium nitrate and cerium nitrate of raw materials at a concentration sufficient to produce (Pr₁₋ₓCeₓ)₂O₂SO₄. Further, in a preparation method of (Pr₁₋ₓCeₓ)₂O₂SO₄ using such a surfactant, it is believed that not only the surfactant acts as a source of the sulfuric acid group, but also a carbon chain moiety thereof acts as an organic template. Therefore, since a precipitate obtained by mixing raw materials can have regular layers, (Pr₁₋ₓCeₓ)₂O₂SO₄ having a high surface area can be obtained by firing the precipitate to decompose and remove the organic template moiety.

The drying and firing of the precipitate may be performed at a temperature and for a time sufficient to decompose and remove the organic template moiety of the surfactant and obtain (Pr₁₋ₓCeₓ)₂O₂SO₄ having a high surface area. For example, the drying may be performed at room temperature under reduced pressure or at a temperature of 80 to 250°C for 12 to 24 hours, and the firing may be performed at a temperature of 500 to 700°C for 1 to 20 hours.

According to the present invention, an oxygen storage/release material which is a compound consisting of Pr₂O₂SO₄ and/or Pr₂O₂S in which a part of Pr is replaced with Ce is used as a catalyst support, and a catalyst metal as an active ingredient is supported on the catalyst support, thereby an exhaust gas purifying catalyst enhanced in the performance of purifying an exhaust gas can be obtained.

By using the oxygen storage/release material of the present invention, the oxygen storage/release capacity at low temperatures is enhanced as compared to the conventional rare earth oxysulfate and/or oxysulfide. Therefore, the air-fuel ratio (A/F) fluctuation in the exhaust gas under a low-temperature condition can be absorbed, so that the purification performance of the exhaust gas purifying catalyst can be enhanced.

According to the present invention, the metal which is supported on (Pr₁₋ₓCeₓ)₂O₂SO₄ and/or (Pr₁₋ₓCeₓ)₂O₂S of a catalyst support may be selected from any metal known to a person skilled in the art as a catalyst component of an exhaust gas purifying catalyst. Preferably, such a metal may include at least one noble metal selected from the group consisting of platinum (Pt), rhodium (Rh), palladium (Pd) and iridium (Ir).

The supporting of the metal on (Pr₁₋ₓCeₓ)₂O₂SO₄ may be performed by any method known to a person skilled in the art.

For example, the metal may be supported by a method where a compound containing the above-described metal as the cation is used as a metal source and (Pr₁₋ₓCeₓ)₂O₂SO₄ is dipped in a solution of the compound at a predetermined concentration and then, subjected to drying, firing and the like, or a method where a complex of the above-described metal is used as a metal source and (Pr₁₋ₓCeₓ)₂O₂SO₄ is dipped in a solution of the complex at a predetermined concentration and then, subjected to drying, firing and the like. The metal may be supported on (Pr₁₋ₓCeₓ)₂O₂SO₄ in a supporting amount of generally from 0.25 to 20 wt%.

The drying and firing of (Pr₁₋ₓCeₓ)₂O₂SO₄ dipped in a solution containing a compound or complex of the metal can be performed at a temperature and for a time sufficient to support the metal on (Pr₁₋ₓCeₓ)₂O₂SO₄. For example, the drying may be performed at a temperature of 80 to 250°C for 12 to 24 hours, and the firing may be performed at a temperature of 400 to 500°C for 2 to 10 hours.

The exhaust gas purifying catalyst may be used, for example, by compressing the fired powder of metal-supported material and pulverizing it into a pellet form, or by adding a predetermined binder to the fired powder of metal-supported material to form a slurry and coating the slurry on a catalyst substrate such as a cordierite-made honeycomb substrate.

### EXAMPLES

The present invention is described in detail below based on Examples, but the present invention is not limited thereto.

In the following Examples, an exhaust gas purifying catalyst was prepared by supporting Pd as a catalyst noble metal on an oxygen storage/release material where a part of Pr in Pr₂O₂SO₄ is replaced with Ce, and the oxygen release capacity thereof was examined.

### [Comparative Example 1]

As a Comparative Example, an exhaust gas purifying catalyst was prepared by supporting 1 wt% of Pd on an oxygen storage/release material consisting of praseodymium oxysulfate Pr₂O₂SO₄. First, praseodymium nitrate hexahydrate (Pr(NO₃)₃·6H₂O), sodium dodecylsulfate (SDS) as a source of a sulfuric acid group moiety, ammonia and water were introduced into a flask at a molar ratio of 1:2:30:60. Then, the flask was placed in an oil bath at 40°C, and the contents were stirred by a stirrer at a rotational speed of 350 rpm for 1 hour in an atmosphere open system. Subsequently, the temperature was elevated to 60°C before stirring for 9 hours, and the system was cooled to room temperature (pH=about 11). The obtained precipitate was separated by centrifugal separation, washed several times with distilled water and then dried under reduced pressure at room temperature. The dried sample was pulverized into a powder form and then fired in a draft at a temperature of 500°C or more for 5 hours to obtain praseodymium oxysulfate Pr₂O₂SO₄.

Thereafter, 1 mL of a palladium nitrate solution was prepared at a concentration giving a Pd supporting amount of 1 wt% per 0.4 g of Pr₂O₂SO₄. Then, about 0.4 g of the Pr₂O₂SO₄ powder prepared above was charged into a crucible, and the crucible was placed on a hotting stirrer and set to a temperature allowing the palladium nitrate solution to dry. When the crucible became hot, the palladium nitrate solution was added dropwise little by little while drying it. After the completion of dropwise addition, the sample was left standing at room temperature for about 1 hour and dried overnight at a temperature of 120°C in a dryer. The dried sample was lightly loosened and then fired in air at 400°C for 2 hours to obtain an exhaust gas purifying catalyst of Pd/Pr₂O₂SO₄.

### [Example 1]

An exhaust gas purifying catalyst of Pd/(Pr_{0.8}Ce_{0.2})₂O₂SO₄ was obtained in the same manner as in Comparative Example 1, except that a part of the raw material praseodymium nitrate hexahydrate (Pr(NO₃)₃·6H₂O) was replaced with cerium nitrate hexahydrate (Ce(NO₃)₃·6H₂O) to become Pr:Ce = 0.8:0.2 (by mol) in terms of the charge ratio.

The oxygen release capacity of the exhaust gas purifying catalysts of Comparative Example 1 and Example 1 prepared above was evaluated by derivative thermogravimetric analysis (DTG). In other words, each catalyst was heated to 900°C at a heating rate of 10°C/min while supplying a test gas of 5% H₂/He thereto, and the mass change of each catalyst involved in the oxygen release from the oxygen storage/release material in the process of elevating the temperature was measured. The results obtained are shown in Fig. 1.

Fig. 1 is a graph showing the measurement results of derivative thermogravimetric analysis (DTG) regarding the exhaust gas purifying catalysts of Example and Comparative Example. In Fig. 1, the heating temperature is plotted along the abscissa axis, and the temporal differentiation of mass change of the catalyst is plotted along the ordinate axis. When a hydrogen-containing test gas is supplied to the catalyst, oxygen is released from the oxygen storage/release material in the catalyst and the released oxygen reacts with hydrogen in the test gas to produce water. Therefore, the mass of the catalyst decreases depending on the amount of the released oxygen. The temperature at which each catalyst exhibits the oxygen release capacity can be known by measuring the temperature when the mass was decreased.

As is clear from Fig. 1, the exhaust gas purifying catalyst of Comparative Example 1 comprising Pr₂O₂SO₄ as the oxygen storage/release material exhibited the oxygen release capacity from a temperature of about 700°C. On the other hand, the exhaust gas purifying catalyst of Example 1 comprising (Pr_{0.8}Ce_{0.2})₂O₂SO₄ as the oxygen storage/release material exhibited the oxygen release capacity from a temperature of about 600°C. Thus, partial replacement of Pr with Ce lowered the temperature, at which the catalyst exhibits the oxygen release capacity, by about 100°C.

### INDUSTRIAL APPLICABILITY

According to the present invention, replacing at least a part of Pr in a compound consisting of praseodymium (Pr) oxysulfate or oxysulfide (Pr₂0₂SO₄ or Pr₂O₂S) with Ce can give an oxygen storage/release material in which the temperature region, in which the material exhibits the oxygen release capacity, is greatly extended to the lower temperature side, as compared to conventional oxygen storage/release materials consisting of a rare earth oxysulfate or oxysulfide. Therefore, when such an oxygen storage/release material is used in an exhaust gas purifying catalyst, the fluctuation of the air-fuel ratio (A/F) in an exhaust gas can be significantly suppressed even at low temperatures, so that purification of an exhaust gas can be achieved in a state closer to an optimal A/F value and the exhaust gas purifying performance of the exhaust gas purifying catalyst can be remarkably enhanced.

## Claims

1. An oxygen storage/release material, comprising a compound consisting of Pr₂O₂SO₄ and/or Pr₂O₂S in which a part of Pr is replaced with Ce.

2. The oxygen storage/release material according to claim 1, wherein the compound consists of (Pr₁₋ₓCeₓ)₂O₂SO₄ and/or (Pr₁₋ₓCeₓ)₂O₂S wherein x is a number of 0.005 to 0.5.

3. An exhaust gas purifying catalyst, comprising the oxygen storage/release material according to claim 1 or 2 and a metal supported thereon.

## Patentansprüche

1. Sauerstoffspeicherungs/freisetzungsmaterial, umfassend eine aus Pr₂O₂SO₄ und/oder Pr₂O₂S bestehende Verbindung, in welcher ein Teil von Pr mit Ce ausgetauscht ist.

2. Sauerstoffspeicherungs/freisetzungsmaterial nach Anspruch 1, wobei die Verbindung aus (Pr₁₋ₓCeₓ)₂O₂SO₄ und/oder (Pr₁₋ₓCeₓ)₂O₂S besteht, wobei x eine Zahl von 0,005 bis 0,5 ist.

3. Abgasreinigungskatalysator, umfassend das Sauerstoffspeicherungs/freisetzungsmaterial nach Anspruch 1 oder 2 und ein darauf getragenes Metall.

## Revendications

1. Matériau de stockage/libération d'oxygène comprenant un composé constitué de Pr₂O₂SO₄ et/ou de Pr₂O₂S dans lequel une partie de Pr est remplacée par Ce.

2. Matériau de stockage/libération d'oxygène selon la revendication 1, dans lequel le composé est constitué de (Pr₁₋ₓCeₓ)₂O₂SO₄ et/ou (Pr₁₋ₓCeₓ)₂O₂S où x est un nombre de 0,005 à 0,5.

3. Catalyseur pour la purification de gaz d'échappement comprenant le matériau de stockage/libération d'oxygène selon la revendication 1 ou 2 et un métal supporté sur son dessus.
